# EUROPÄISCHE PATENTSCHRIFT

(11) **EP 2 783 086 B1**
(45) Veröffentlichungstag und Bekanntmachung des Hinweises auf die Patenterteilung: **24.04.2019**
(21) Anmeldenummer: 12778237.3
(22) Anmeldetag: 10.10.2012
(51) Int. Cl.: F01M 5/00, F01N 3/20, F01N 5/02, B60H 1/02, F02B 37/18

(54) **VERFAHREN ZUM BETRIEB EINER BRENNKRAFTMASCHINE**
METHOD FOR OPERATING AN INTERNAL COMBUSTION ENGINE
PROCÉDÉ POUR LE FONCTIONNEMENT D'UN MOTEUR À COMBUSTION INTERNE

(30) Priorität: 24.11.2011 DE 102011119389
(43) Veröffentlichungstag der Anmeldung: 01.10.2014
(73) Patentinhaber: Volkswagen Aktiengesellschaft, 38440 Wolfsburg (DE)
(72) Erfinder: KÜHLMEYER, Jens, 38518 Gifhorn (DE)
(86) Internationale Anmeldenummer: PCT/EP2012/004246
(87) Internationale Veröffentlichungsnummer: WO 2013/075771

(56) Entgegenhaltungen:
- EP-A1- 0 985 807
- DE-A1- 10 042 361
- DE-A1- 10 107 018
- DE-A1- 19 503 989
- JP-A- 60 198 334
- US-A- 5 937 640
- US-A1- 2001 039 230
- US-A1- 2006 086 546

## Beschreibung

Die Erfindung betrifft ein Verfahren zum Betrieb einer Brennkraftmaschine, nach dem Oberbegriff des Anspruchs 1.

Von einigen Dieselmotoren ist die Verwendung eines AGR-Kühlers bekannt, der als Wärmetauscher eingesetzt wird. Die bei der Abkühlung gewonnene Wärme des Abgases wird hierbei einer weiteren Nutzung, wie zum Beispiel zur Erwärmung des Motoröls der Brennkraftmaschine oder auch eines Fahrgastraums, zugeführt. Bei Ottomotoren besteht der Trade-off ausschließlich aus einer schnellen Erwärmung des Katalysators auf dessen Betriebstemperatur sowie einer möglichst schnellen Durchwärmung der Betriebsmedien aus Verbrauchsgründen.

Es besteht bei vielen in Kraftfahrzeugen eingesetzten Brennkraftmaschinen, insbesondere während einer ersten Betriebsphase vor dem Erreichen der Betriebstemperatur, das Problem der geringen Wärmeentwicklung.

Dies bedingt zumindest bis zum Erreichen des Betriebswärmezustands üblicherweise einen erhöhten Kraftstoffbedarf bei gleichbleibender Motorenleistung und/oder Einbußen bei der Erwärmung des Fahrgastraums.

Die Abgasenergie, die durch den Wärmetauscher gewonnen wird und zur Erwärmung des Fahrgastraums, des Kühlwassers oder Ölkreislaufs genutzt werden kann, steht in Konkurrenz zu der für die Aufheizung des Katalysators benötigte Abgasenergie. Da eine Verlängerung der Aufwärmphase des Katalysators aus Emissionsgründen nicht toleriert werden kann, werden bei derzeit bekannten Konzepten die Betriebsparameter der Brennkraftmaschine während dieser ersten Betriebsphase derart eingestellt, dass eine erhöhte Wärmeenergie in dem Abgas enthalten ist. Eine solche Betriebspunktänderung ist jedoch mit einem erhöhten Kraftstoffverbrauch verbunden.

Die EP 0 985 807 A1 beschreibt ein Verfahren zum Betrieb einer Brennkraftmaschine, wobei im Abgasstrang der Brennkraftmaschine ein Katalysator sowie ein Wärmetauscher, insbesondere zur Vorwärmung eines Kühlmittels angeordnet sind. In einer durch die Betriebstemperatur des Katalysators bestimmten Betriebsphase (Kaltstartphase) der Brennkraftmaschine wird der Katalysator mittels einer elektrischen Heizung beheizt. Ein Teilstrom wird in Strömungsrichtung vor dem Katalysator entnommen und dem Wärmetauscher zugeführt. Ein Katalysator, der in Strömungsrichtung des Abgases vor der Zuführung zu dem Wärmetauscher angeordnet ist, wird durch die Heizung beheizt.

Selbstverständlich ist auch bereits daran gedacht worden, für den Wärmeenergiebedarf, beispielsweise für die Innenraumerwärmung, zusätzliche Verbrennungseinrichtungen einzusetzen. Die DE 10 2004 061 809 A1 offenbart beispielsweise ein Heizsystem für ein Kraftfahrzeug, bei dem zur Erwärmung des Motors oder zur Beheizung des Kraftfahrzeugs ein zusätzlicher Brenner eingesetzt wird. Durch den Einsatz dieses Brenners wird jedoch das Gesamtgewicht der Brennkraftmaschine erhöht. Beim Betrieb des Brenners wird zusätzlicher Brennstoff verbraucht und es werden zudem unerwünschte Emissionen erzeugt.

Die DE 10 2009 058 609 A1 zeigt eine Einrichtung zur Abgasrückführung, die einen Abgasrückführungskühler zur Abkühlung des Abgases und zur Ableitung von Abgaswärme aufweist.

Aus der DE 2 230 663 A1 ist ein elektrisch vorheizbarer Katalysator bekannt, bei dem Wärme von einer elektrischen Heizvorrichtung konduktiv auf den Katalysator übertragen wird. Dadurch gelangen Motorabgase in den erhitzten Katalysator, was dazu beiträgt, unerwünschte Bestandteile der Abgase in weniger schädliche Bestandteile zu überführen.

Die EP 1 553 269 A1 zeigt ein Abgassystem eines Dieselmotors, das ab einem Abgaskrümmer in zwei Flusspassagen verzweigt ist. Ein Turbolader ist in einer der Flusspassagen und ein Abgasrückführungskühler ist in der anderen Flusspassage angeordnet. Die vom Turbolader ausgestoßenen Abgase strömen durch einen mit einem elektrischen Heizer ausgestatteten Katalysator und werden nach außen entladen. Auf der anderen Seite werden die durch den Abgasrückführungskühler strömenden Gase in einen Einlasskrümmer rückgeführt, wobei die Flussrate durch ein Abgasrückführungsventil gesteuert wird.

Ferner bezieht sich die DE 10 2009 017 118 A1 auf einen Generator, der über das Abgassystem und das Kühlsystem gespeist wird und durch eine effizientere Nutzung der Abwärme von Verbrennungsmotoren nicht nur Warmluft für den Innenraum eines Kraftfahrzeugs zu Verfügung stellt, sondern Elektrizität erzeugt, um den Gesamtwirkungsgrad eines Verbrennungsmotors deutlich zu steigern.

Vor diesem Hintergrund liegt der Erfindung die Aufgabe zugrunde, eine effiziente Nutzung der Abwärme der Brennkraftmaschine insbesondere in einer ersten Betriebsphase zu erreichen, wobei der Wirkungsgrad des Gesamtsystems verbessert und Emissionen reduziert werden.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zum Betrieb einer Brennkraftmaschine vorgesehen, bei dem zumindest ein Teilstrom des Abgases dem Wärmetauscher (8) unter Umgehung einer Turbine eines Abgasturboladers zugeführt wird, und bei dem die Brennkraftmaschine zumindest zwei Zylinderbänke aufweist, denen jeweils zumindest ein Katalysator im Abgasstrang zugeordnet ist, wobei zumindest ein Teilstrom des Abgases der einen Zylinderbank nach dem Passieren des Wärmetauschers dem der anderen Zylinderbank zugeordneten Katalysator zugeführt wird.. Indem der Abgaswärmetauscher in der ersten Betriebsphase ausschließlich in Verbindung mit einer elektrischen Heizung des Katalysators betrieben wird, erfolgt die Aufheizung des Katalysators insbesondere zu Beginn der ersten Betriebsphase unmittelbar nach dem Start der Brennkraftmaschine im Wesentlichen durch die elektrische Heizung. Dadurch ist eine Änderung der Betriebsparameter der Brennkraftmaschine während dieser ersten Betriebsphase entbehrlich, die beim Stand der Technik im Allgemeinen mit dem Ziel einer maximalen Abgastemperatur vorgenommen wird. Vielmehr wird die schnelle Aufheizung des Katalysators emissionsfrei durch die elektrische Heizung erreicht. Als eine direkte Folge dieser Maßnahme wird der nach dem Stand der Technik erhöhte Kraftstoffverbrauch in dieser ersten Betriebsphase vermieden. Die elektrische Energie kann zudem sehr schnell der Batterie des Kraftfahrzeugs auch bereits vor dem Start der Brennkraftmaschine entnommen werden, womit eine Reduktion der Rohemission erzielt wird. Die Abgastemperatur beträgt auch bei einer im Hinblick auf den Wirkungsgrad optimierten Verbrennung innerhalb der Brennkraftmaschine mehrere hundert Grad Celsius, sodass eine hohe thermische Energiemenge für ein integriertes Thermo-Management durch eine Ableitung eines Teilstroms des Abgases zu dem Wärmetauscher zur Verfügung steht. Die im Abgas enthaltene Wärme kann daher in optimaler Weise genutzt werden, um so beispielsweise den Motorölkreislauf oder den Kühlmittelkreis der Brennkraftmaschine schneller auf die gewünschte Betriebstemperatur zu erwärmen. Durch die so erreichbare schnelle Aufheizung wird ein früherer Übergang von der hohen Kaltreibung in die niedrige Warmreibung erreicht, was zu einer weiteren Senkung des Kraftstoffverbrauchs und zu einem geringeren Verschleiß führt.

Um die elektrische Energie für die elektrische Heizung des Katalysators möglichst optimal und verlustfrei bereitstellen zu können, wird diese vorzugsweise in Verbindung mit einem 24V- oder 42V-Bordnetz betrieben. Insbesondere eignen sich vor allem auch Hybridfahrzeuge aufgrund ihres großen elektrischen Energiespeichers zur Realisierung der Erfindung.

Alternativ oder ergänzend zu der Entnahme der elektrischen Energie aus der Batterie des Kraftfahrzeugs erweist es sich als besonders praxisgerecht, wenn die elektrische Energie für die elektrische Heizung des Katalysators mittels eines Kondensators, insbesondere mittels zumindest eines Superkondensators oder Ultrakondensators, bereitgestellt wird. Hierdurch wird eine schnelle Verfügbarkeit der erforderlichen elektrischen Energie für die elektrische Heizung des Katalysators realisiert, wobei der Ladungszustand der Batterie des Kraftfahrzeugs in einer späteren Betriebsphase vorzugsweise durch eine wirkungsgradsteigernde Betriebspunktverlagerung ausgeglichen werden kann. Hierzu wird vorzugsweise in einer zweiten Betriebsphase die elektrische Heizung abgeschaltet.

Die Betriebsphase der elektrischen Heizung des Katalysators ist nicht auf die Startphase der Brennkraftmaschine beschränkt. Vielmehr wird eine besonders vorteilhafte Ausgestaltung des erfindungsgemäßen Verfahrens auch dadurch realisiert, dass die Betriebsphase bei Erreichen der gewöhnlichen Betriebstemperatur der Brennkraftmaschine endet, sodass auch bei einer zwischenzeitlichen Unterschreitung der erforderlichen Betriebstemperatur des Katalysators die elektrische Heizung in Betrieb genommen werden kann.

Vorzugsweise wird der auch als Abgas-Medien-Wärmetauscher bezeichnete Wärmetauscher, welcher insbesondere dem Kühlwasserkreislauf oder dem Motorölkreislauf zugeordnet ist, abgasseitig mittels eines als Klappe ausgeführten Absperrorgans verschlossen, sobald das aufzuwärmende Medium, insbesondere ein Fluid, seine jeweilige Betriebstemperatur erreicht hat. Zugleich wird so auch vermieden, dass eine sehr hohe Abgastemperatur zu einer Überhitzung der Medien führt.

Bei einer besonders praxisgerechten Abwandlung der vorliegenden Erfindung ist das Absperrorgan ähnlich einer an sich bekannten Wastegate-Klappe ausgeführt, um so auch bei sehr hohen Temperaturen eine zuverlässige Unterbrechung der Abgaszuführung sicherzustellen.

Um das Absperrorgan auch bei Einwirkung starker Abgaspulsationen zuverlässig in der geschlossenen Funktionsstellung festlegen zu können, wird das Absperrorgan mittels eines elektrischen Stellantriebs betätigt. Dabei dient vorzugsweise ein selbsthemmendes Getriebe, beispielsweise ein Schneckengetriebe, der Kraftübertragung der Antriebsleistung des Stellantriebs auf das Absperrorgan. Hierdurch wird der Energieverbrauch des Stellantriebs in der jeweiligen Funktionsstellung wesentlich reduziert.

Bei einer ebenfalls besonders Erfolg versprechenden Abwandlung der vorliegenden Erfindung weist die Brennkraftmaschine zumindest zwei Zylinderbänke auf, denen jeweils zumindest ein separater Katalysator im Abgasstrang zugeordnet ist, wobei zumindest ein Teilstrom des Abgases der einen Zylinderbank nach dem Passieren des Wärmetauschers dem der anderen Zylinderbank zugeordneten Katalysator zugeführt wird. Durch die so realisierbare überkreuzende Abgasführung wird auch bei einer Abschaltung zumindest einer Zylinderbank ein Auskühlen des dieser Zylinderbank zugeordneten Abgasstrangs vermieden. Somit kann auch bei diesem Katalysator die Betriebstemperatur aufrechterhalten werden, sodass der Katalysator dadurch seine Abgasreinigungsfunktion erfüllen kann.

Das erfindungsgemäße Verfahren sieht die Beaufschlagung des Wärmetauschers durch den Abgasstrom mittels Einstellung der geöffneten Funktionsstellung des Absperrorgans während der ersten Betriebsphase der Brennkraftmaschine vor. Vorzugsweise wird das Absperrorgan bereits mit der Einschaltung der Zündung bzw. der Inbetriebnahme der Brennkraftmaschine oder bereits bei Abschaltung der Brennkraftmaschine bzw. im Stillstand der Brennkraftmaschine in seine geöffnete Funktionsstellung gebracht, um so eine verzögerungsfreie Anströmung des Wärmetauschers nach dem Start der Brennkraftmaschine sicherzustellen. Insbesondere müssen nicht zunächst Messwerte erfasst bzw. Verschlussorgane angesteuert werden, was in der Praxis mit einer zeitlichen Verzögerung verbunden ist.

Bei einer Anordnung zur zumindest teilweisen Rückführung von Abgasen einer Brennkraftmaschine in den der Brennkraftmaschine zuzuführenden Gasstrom, wobei die Anordnung einen im Abgasstrang angeordneten Katalysator sowie einen Wärmetauscher zur Erwärmung eines Fluids aufweist, ist dem Katalysator eine elektrische Heizung zugeordnet, durch die zumindest während einer ersten Betriebsphase der Katalysator mit der erforderlichen Heizleistung zur Erreichung der Betriebstemperatur versorgt wird. Hierdurch wird erstmals ein integriertes Thermo-Management realisierbar, indem ein wesentlicher Teilstrom aus dem Abgas der Brennkraftmaschine entnommen wird und dadurch mittels des Wärmetauschers zur Erwärmung beispielsweise von Schmier- oder Kühlmitteln oder zur Beheizung des Innenraums des Kraftfahrzeugs verfügbar ist, während die erforderliche Erwärmung des Katalysators ergänzend oder ausschließlich mittels der elektrischen Heizung erzeugt bzw. ausgeglichen wird. In überraschend einfacher Weise lässt sich entgegen häufiger Vorurteile in der Fachwelt der Gesamtwirkungsgrad des Systems durch die elektrische Heizung wesentlich steigern, weil eine nach dem Stand der Technik erforderliche Änderung des Betriebspunkts der Brennkraftmaschine vermieden oder zumindest wesentlich verkürzt werden kann.

Dabei erweist es sich als besonders sinnvoll, wenn die Einrichtung einen Sensor zur Erfassung wesentlicher Betriebsparameter, insbesondere der Betriebstemperatur der Brennkraftmaschine, umfasst sowie mit einer Steuereinheit für die elektrische Heizung ausgestattet ist. Hierdurch kann die Heizleistung an die jeweiligen Betriebsbedingungen in optimaler Weise angepasst und die Solltemperatur entsprechend eingestellt sowie die Temperatur des Katalysators zuverlässig in einem vorbestimmten Temperaturbereich gehalten werden.

Der Wärmetauscher könnte grundsätzlich in einer beliebigen Position an der Einrichtung angeordnet sein. Besonders sinnvoll ist hingegen eine Anordnung, bei welcher der Wärmetauscher in eine Ölwanne der Brennkraftmaschine integriert ist. Hierdurch wird eine platzsparende Bauform erreicht, bei welcher zudem die Übertragung der Wärmeenergie des Abgases mit geringen Verlusten in den Motorölkreislauf eingebracht werden kann. Selbstverständlich schließt diese Anordnung die Verwendung des Wärmetauschers zur Erwärmung des Kühlmittels ebenso wenig aus wie eine Nutzung der Wärme für den Innenraum des Kraftfahrzeugs.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: eine mit einem Wärmetauscher und einem Katalysator ausgestattete Brennkraftmaschine;
- Fig. 2: die Brennkraftmaschine mit einer abweichenden Abgasführung.

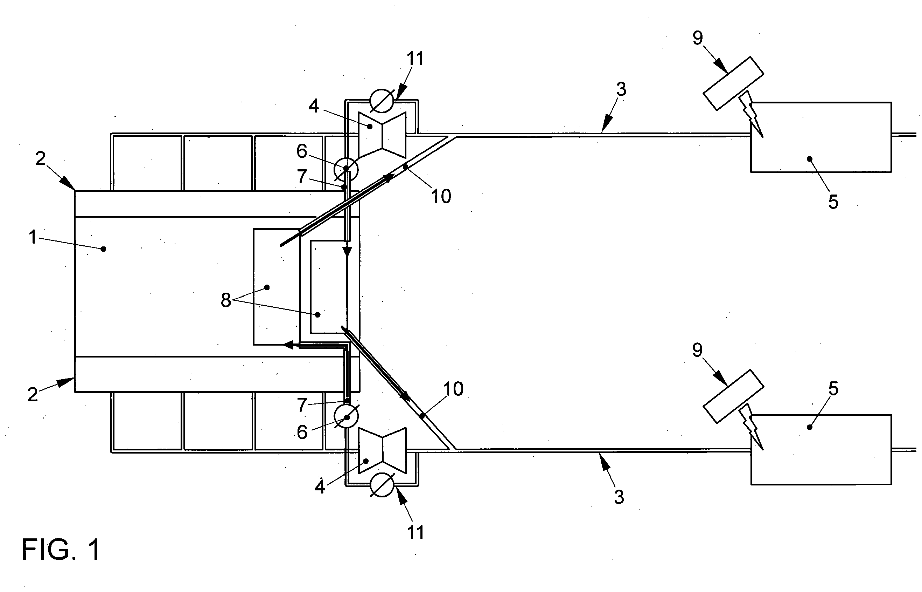

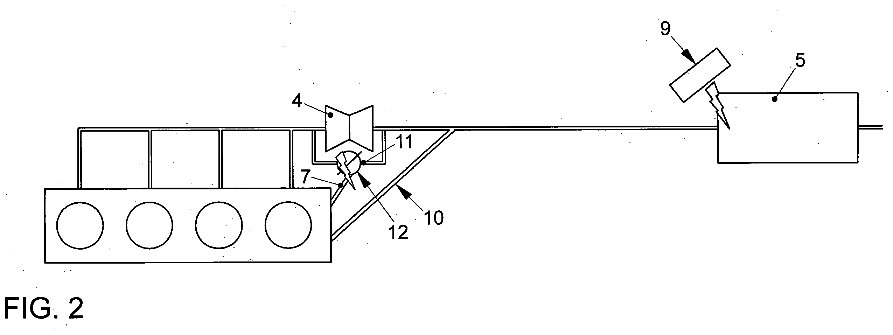

In den Figuren 1 und 2 ist jeweils in einer Prinzipdarstellung eine Brennkraftmaschine 1 gezeigt, die in einer V-Anordnung mit zwei Zylinderbänken 2 ausgestattet bzw. als Reihenmotor ausgeführt ist. Jeder Zylinderbank 2 ist ein eigener Abgasstrang 3 mit einem Abgasturbolader 4 sowie mit einem Katalysator 5 zugeordnet. Weiterhin kann die Brennkraftmaschine 1 mit einer nicht weiter dargestellten Abgasrückführung ausgestattet sein. In einer ersten Betriebsphase, insbesondere während der sogenannten Kaltstartphase, wird dem Abgas mittels einer durch ein elektromotorisch betätigbares Verschlussorgan 6 verschließbaren Zuleitung 7 zumindest ein Teilstrom in Strömungsrichtung vor dem Abgasturbolader 4 und vor dem Katalysator 5 entnommen. Der Teilstrom wird einem in einer Ölwanne der Brennkraftmaschine 1 integrierten Wärmetauscher 8 zugeführt. Während dieser Betriebsphase wird der Katalysator 5 von dem Abgas durchströmt, welches zuvor einen Teil der Wärmeenergie in dem Wärmetauscher 8 auf das Motoröl übertragen hat. Zum Ausgleich der reduzierten Wärmeenergie wird der Katalysator 5 zusätzlich mittels einer elektrischen Heizung 9 erwärmt. Indem der Wärmetauscher 8 in der ersten Betriebsphase ausschließlich in Verbindung mit einer elektrischen Heizung 9 des Katalysators 5 eingesetzt wird, erfolgt die Aufheizung des Katalysators 5 insbesondere zu Beginn der ersten Betriebsphase unmittelbar nach dem Start der Brennkraftmaschine 1 im Wesentlichen durch die elektrische Heizung 9. Dadurch ist eine Änderung der Betriebsparameter der Brennkraftmaschine 1 während dieser ersten Betriebsphase entbehrlich. In der dargestellten Überkreuzführung der Abgasströme wird der dem jeweiligen Abgasstrang 3 der jeweiligen Zylinderbank 2 entnommene Teilstrom nicht in denselben, sondern dem der anderen Zylinderbank 2 zugeordneten Abgasstrang 3 mittels einer Ausleitung 10 zugeführt. Hierdurch kann der in diesem Abgasstrang 3 angeordnete Katalysator 5 auch dann auf der gewünschten Betriebstemperatur gehalten werden, wenn die zugeordnete Zylinderbank 2 vorübergehend außer Betrieb ist. Die Ausleitung 10 mündet unter Umgehung des Abgasturboladers 4 in den Abgasstrang 3. Zusätzlich ist dem Abgasturbolader 4 ein an sich bekannter Bypasskanal 11 zugeordnet.

Wie in Figur 2 zu erkennen, kann die Zuleitung 7 zu dem in Figur 1 gezeigten Wärmetauscher 8 alternativ auch von dem Bypasskanal 11 abzweigen. Dadurch kann auf das in Figur 1 gezeigte zusätzliche Verschlussorgan 6 verzichtet werden, wenn durch ein in dem Bypasskanal 11 vorhandenes Verschlussorgan 12 zugleich der Abgasstrom zu der Zuleitung 7 einstellbar ist. Der Abgasstrom gelangt dann entsprechend durch die Ausleitung 10 stromabwärts des Abgasturboladers 4 in den in Figur 1 gezeigten Abgasstrang 3 und weiter zu dem mittels der elektrischen Heizung 9 beheizbaren Katalysator 5. Zum Zweck der variablen Abgasverteilung kann das Verschlussorgan 12 auch als Verteiler zur variablen Einstellung der Volumenströme ausgeführt sein.

### Bezugszeichenliste

- 1: Brennkraftmaschine
- 2: Zylinderbank
- 3: Abgasstrang
- 4: Abgasturbolader
- 5: Katalysator

- 6: Verschlussorgan
- 7: Zuleitung
- 8: Wärmetauscher
- 9: Heizung
- 10: Ausleitung

- 11: Bypasskanal
- 12: Verschlussorgan

## Patentansprüche

1. Verfahren zum Betrieb einer Brennkraftmaschine (1), wobei im Abgasstrang (3) der Brennkraftmaschine (1) ein Katalysator (5) sowie ein Wärmetauscher (8) angeordnet sind, in welchem in einer Betriebsphase dem Abgas zumindest ein Teilstrom in Strömungsrichtung vor dem Katalysator (5) entnommen und dem Wärmetauscher (8) zugeführt wird, und während dieser Betriebsphase der Katalysator (5) von dem Abgas durchströmt wird, welches zuvor einen Teil der Wärmeenergie in dem Wärmetauscher (8) auf das Motoröl übertragen hat, wobei zum Ausgleich der reduzierten Wärmeenergie dieser Katalysator (5) mittels einer elektrischen Heizung (9) beheizt wird, **dadurch gekennzeichnet, dass** in dieser Betriebsphase zumindest ein Teilstrom des Abgases dem Wärmetauscher (8) unter Umgehung einer Turbine eines Abgasturboladers (4) zugeführt wird, und dass die Brennkraftmaschine (1) zumindest zwei Zylinderbänke (2) aufweist, denen jeweils zumindest ein Katalysator (5) im Abgasstrang (3) zugeordnet ist, wobei zumindest ein Teilstrom des Abgases der einen Zylinderbank (2) nach dem Passieren des Wärmetauschers (8) dem der anderen Zylinderbank (2) zugeordneten Katalysator (5) zugeführt wird.

2. Verfahren nach Anspruch 1, **dadurch gekennzeichnet, dass** die Betriebsphase durch die Betriebstemperatur des Katalysators (5) bestimmt ist.

3. Verfahren nach den Ansprüchen 1 oder 2, **dadurch gekennzeichnet, dass** die Betriebsphase eine Kaltstartphase ist.

4. Verfahren nach zumindest einem der vorangehenden Ansprüche, **dadurch gekennzeichnet, dass** der Wärmetauscher (8) ausschließlich während einer Warmlaufphase bis zum Erreichen der Betriebstemperatur der Brennkraftmaschine (1) von dem Abgas angeströmt wird.

5. Verfahren nach zumindest einem der vorangehenden Ansprüche, **dadurch gekennzeichnet, dass** zum Abschalten des Wärmetauschers (8) die Zuführung von Abgas zu dem Wärmetauscher (8) unterbrochen wird.

6. Verfahren nach zumindest einem der vorangehenden Ansprüche, **dadurch gekennzeichnet, dass** der Wärmetauscher (8) mittels eines Verschlussorgans (6, 12) abgeschaltet wird.

7. Verfahren nach Anspruch 6, **dadurch gekennzeichnet, dass** das Verschlussorgan (6, 12) mittels eines elektrischen Stellmotors angetrieben wird.

8. Verfahren nach zumindest einem der vorangehenden Ansprüche, **dadurch gekennzeichnet, dass** die elektrische Energie für die Heizung (9) des Katalysators (5) mittels eines Kondensators bereitgestellt wird.

## Claims

1. Method for operating an internal combustion engine (1), wherein, in the exhaust-gas tract (3) of the internal combustion engine (1), there are arranged a catalytic converter (5) and a heat exchanger (8), in which, in one operating phase, at least a partial stream is extracted from the exhaust gas upstream of the catalytic converter (5) in a flow direction and is fed to the heat exchanger (8), and, during this operating phase, the catalytic converter (5) is flowed through by that exhaust gas which has previously transferred a part of the heat energy in the heat exchanger (8) to the engine oil, wherein, to compensate for the reduced heat energy, said catalytic converter (5) is heated by means of an electrical heater (9), **characterized in that**, in this operating phase, at least a partial stream of the exhaust gas is fed to the heat exchanger (8) whilst bypassing a turbine of an exhaust-gas turbocharger (4), and **in that** the internal combustion engine (1) has at least two cylinder banks (2) which are each assigned at least one catalytic converter (5) in the exhaust-gas tract (3), wherein at least a partial stream of the exhaust gas of one cylinder bank (2) is, after passing through the heat exchanger (8), fed to the catalytic converter (5) assigned to the other cylinder bank (2).

2. Method according to Claim 1, **characterized in that** the operating phase is determined by the operating temperature of the catalytic converter (5).

3. Method according to Claims 1 or 2, **characterized in that** the operating phase is a cold-start phase.

4. Method according to at least one of the preceding claims, **characterized in that** the heat exchanger (8) is impinged on by the exhaust gas only during a warm-up phase until the operating temperature of the internal combustion engine (1) is reached.

5. Method according to at least one of the preceding claims, **characterized in that**, for the deactivation of the heat exchanger (8), the feed of exhaust gas to the heat exchanger (8) is stopped.

6. Method according to at least one of the preceding claims, **characterized in that** the heat exchanger (8) is deactivated by means of a closure element (6, 12).

7. Method according to Claim 6, **characterized in that** the closure element (6, 12) is driven by means of an electric actuating motor.

8. Method according to at least one of the preceding claims, **characterized in that** the electrical energy for the heating (9) of the catalytic converter (5) is provided by means of a capacitor.

## Revendications

1. Procédé pour le fonctionnement d'un moteur à combustion interne (1), dans lequel un catalyseur (5) ainsi qu'un échangeur de chaleur (8) sont disposés dans la ligne d'échappement (3) du moteur à combustion interne (1), dans lequel dans une phase de fonctionnement on prélève au moins un courant partiel des gaz d'échappement avant le catalyseur (5) dans la direction d'écoulement et on l'envoie à l'échangeur de chaleur (8), et pendant cette phase de fonctionnement le catalyseur (5) est traversé par les gaz d'échappement, qui ont auparavant transmis une partie de l'énergie thermique à l'huile du moteur dans l'échangeur de chaleur (8), dans lequel on chauffe ce catalyseur (5) au moyen d'un chauffage électrique (9) afin de compenser l'énergie thermique réduite, **caractérisé en ce que** dans cette phase de fonctionnement on envoie au moins un courant partiel des gaz d'échappement à l'échangeur de chaleur (8) en contournant une turbine d'un turbocompresseur à gaz d'échappement (4), et **en ce que** le moteur à combustion interne (1) présente au moins deux blocs de cylindres (2), auxquels au moins un catalyseur (5) est respectivement associé dans la ligne d'échappement (3), dans lequel on envoie au moins un courant partiel des gaz d'échappement d'un premier bloc de cylindres (2) au catalyseur (5) associé à l'autre bloc de cylindres (2) après la traversée de l'échangeur de chaleur (8).

2. Procédé selon la revendication 1, **caractérisé en ce que** la phase de fonctionnement est déterminée par la température de fonctionnement du catalyseur (5).

3. Procédé selon une des revendications 1 ou 2, **caractérisé en ce que** la phase de fonctionnement est une phase de démarrage à froid.

4. Procédé selon au moins une des revendications précédentes, **caractérisé en ce que** l'échangeur de chaleur (8) est parcouru exclusivement par les gaz d'échappement pendant une phase d'échauffement jusqu'à ce que la température de fonctionnement du moteur à combustion interne (1) soit atteinte.

5. Procédé selon au moins une des revendications précédentes, **caractérisé en ce que** l'on interrompt l'envoi de gaz d'échappement à l'échangeur de chaleur (8) pour arrêter l'échangeur de chaleur (8).

6. Procédé selon au moins une des revendications précédentes, **caractérisé en ce que** l'on arrête l'échangeur de chaleur (8) au moyen d'un organe de fermeture (6, 12).

7. Procédé selon la revendication 6, **caractérisé en ce que** l'on entraîne l'organe de fermeture (6, 12) au moyen d'un servomoteur électrique.

8. Procédé selon au moins une des revendications précédentes, **caractérisé en ce que** l'on fournit l'énergie électrique pour le chauffage (9) du catalyseur (5) au moyen d'un condensateur.
